# EUROPEAN PATENT SPECIFICATION

(11) **EP 4 172 092 B1**
(45) Date of publication and mention of the grant of the patent: **06.08.2025**
(21) Application number: 21735920.7
(22) Date of filing: 23.06.2021
(51) Int. Cl.: B66B 5/00, B64F 1/30, B66B 29/00

(54) **PROCESS FOR CONTROLLING PASSENGER NUMBERS ON A PASSENGER MOVING SYSTEM**
VERFAHREN ZUR STEUERUNG VON FAHRGASTZAHLEN IN EINEM PERSONENBEFÖRDERUNGSSYSTEM
PROCÉDÉ POUR CONTRÔLER LES NOMBRES DE PASSAGERS SUR UN SYSTÈME DE DÉPLACEMENT DE PASSAGERS

(30) Priority: 30.06.2020 EP 20382577
(43) Date of publication of application: 03.05.2023
(73) Proprietor: TK Escalator Norte, S.A., 33682 Mieres (ES)
(72) Inventor: PÉREZ PÉREZ, Marcos, 33012 Oviedo (ES); MENDIOLAGOITIA JULIANA, José, 33203 Gijón (ES); GONZALEZ MIERES, Isabel, 33204 Gijón (ES); ÁLVAREZ CUERVO, Adrián, 33402 Avilés (ES); GRANDA IGLESIAS, Alejandro, 33401 Avilés (ES); SESMA SANCHEZ, Francisco Javier, 33204 Gijón (ES)
(74) Representative: Jacobi, Nicolas
(86) International application number: PCT/EP2021/067140
(87) International publication number: WO 2022/002717

(56) References cited:
- CN-A- 107 934 728
- JP-A- H10 279 245
- US-B2- 7 140 469

## Description

### Technical field of invention

Queue control for passenger moving systems in order to avoid overcrowding and potential risks to passengers.

### Background

Safety codes for escalators and moving walks hereinafter referred to as escalators are different depending on the area of installation. One of the more used codes worldwide is EN115 family of standards, applicable in Europe and taken usually as a reference in the countries where there is no specific code for escalator products. According to the code, it is necessary to have enough free unrestricted available space at the exit of the escalator to accommodate passengers who arrives to the landing plate and moves to the exit. In particular, the code requests that the required space at the escalator exit shall at least correspond to the distance between the outer edges of the handrails plus 80 mm on each side. The depth shall be at least 2,50 m measured from the end of the balustrade. The code allows to reduce the free space length to 2,00 m if the width of the unrestricted area is increased to at least double the distance between the outer edges of the handrails plus 80 mm on each side.

Situations can occur that cause passengers to queue (for example at airport police control, at an airport boarding gate, at a cashiers desk in a shopping mall, at an entrance to a show, at a platform in a metro or train station, etc.). Sometimes, this can pose risks to passenger safety, e.g., when the queue reaches the exit of the escalator blocking the passage of the escalator passengers so they cannot leave the moving steps or pallets when it is a moving walk. It could also happen that one escalator precedes another escalator and depending on the configuration of the building, there could be no exit in the space between both landings, i.e. the arrival of one escalator and the departure of the other one. In this scenario, if one escalator stops, the one that precedes it should also stop in order to avoid overloading the space in-between which could cause an accident.

### State of the art

EP3075699B1 discloses a passenger conveyance system. It describes a system that detects a passenger using 3D sensors to customize the door operation. The system however has no connection with the operation of the elevator or escalator doors.

US20190177119A1 describes a system that monitors an area and adapts the video sending function depending on the position of the people in the area. The system is focused on how to send the video data.

JP2020050517 describes a congestion detection system in an alighting place of an escalator. The system detects a passenger and measures the time between two points at an alighting place of the escalator. If the time exceeds a predefined time, congestion is detected. The system is not connected to the controller and does not perform any action in relation to the escalator.

These solutions involve monitoring an area inside or close to an escalator/elevator. However, none of them monitor the complete exit area or lobby.

A solution to the above problem is currently solved by synchronizing both controllers so that when the upper escalator stops, it triggers the stopping of the preceding one. There is currently no solution to detect overcrowding unless a person monitors the installation and stops the escalator. Additionally, an escalator should not be stopped if there are passengers using it as it could cause an accident.

There remains a need to be able to constantly monitor an escalator or moving walk in order to avoid that a situation of overcrowding arises. Ideally, when a risk of overcrowding starts due to the stoppage of an escalator or to any other event, the escalator that feeds the overcrowding should decrease its speed gradually until it comes to a complete stop. This escalator should not be used again for any passengers until the risk of overcrowding reduces.

US 7 140 469 B2 discloses a device for area monitoring at least one of within and outside an elevator car for using in a process for monitoring said area. The process includes recognizing at least one of the states of e.g.: a number of passengers in an elevator car or in an access area in front of an elevator shaft; a number of persons entering or leaving the elevator car; a directional flow of persons; an overload of the elevator car; an incorrect loading of the elevator car.

JP H10 279245 discloses a passenger conveyor control device comprising: an inverter circuit for variably controlling the speed of a drive machine that drives a moving surface; and a control circuit for variably controlling the output frequency of the inverter circuit. The device comprises a congestion level detection means for detecting a congestion level of a landing, and the control circuit variably controls the output frequency of the inverter circuit in accordance with the congestion level of the landing detected by the congestion level detection means.

CN 107 934 728 A discloses an escalator exit monitoring system used to monitor the congestion condition of the exit area, the monitoring system comprises: a pressure sensor is disposed in the outlet area, and is used to detect a pressure value in the outlet area; a processor, data-connected to the pressure sensor, and generating a congestion signal when the pressure value detected by the pressure sensor is continuously greater than a preset pressure threshold for a period exceeding a preset stay time; and a controller is data-connected to the processor, and controls the escalator to slow down or stop when receiving the congestion signal.

### Summary of the invention

It is an object of the invention, to provide a way in which to automatize a monitoring process for a passenger moving system, which is an escalator or moving walk, in order to avoid overcrowding.

If the system is able to detect when the risk is too high, it can decide autonomously that the stop should be performed immediately without having to first reduce the speed since the code allows for a hard stop.

This object is solved by process according to claim 1; embodiments are subject of the subclaims and the description.

### Description

The invention relates to a process for automizing the monitoring of passengers on a passenger moving system comprising the steps of:
a) continuously monitoring an area, preferably a queue area, and/or an exit area of a first passenger moving system wherein the area is located beyond at least one threshold on the passenger moving system wherein threshold refers to a point of entry or exit. The passenger moving system is an escalator or moving walk. There could be more than one passenger moving system.
b) calculating the amount of free and/or occupied space within the area;
c) detecting a risk of overcrowding in the area. This is preferably performed by a processor that is adapted to calculate the amount of free space in the monitored area;
d) optionally activating a speed change function on the passenger moving system. If the processor detects that there is not enough available space for passengers in the monitored area, it will send a command signal to a controller to trigger a speed change function. Preferably a speed change function can be carried out on an escalator or moving walk.
e) communicating a warning signal to passengers e.g., oral, aural, visual, sensory signals, informing them that they should not use the passenger moving system. This is preferably performed simultaneously with step c. so that the passengers are made aware that they can expect a change on the passenger moving system.

This advantageously provides a process that can directly and continuously monitor the queue area and measure the volume of people using a monitoring device, e.g., a 3D sensor, a camera, an electromagnetic sensor. By continuously measuring the free space available, the process allows that the passenger moving system knows the percentage occupation and can update the operation of the moving system accordingly.

For the purposes of this invention, "passenger moving system" includes escalators and moving walks.

In an embodiment of the invention, the process further comprises the steps of:
f) closing a barrier at a threshold e.g., an entrance of a first passenger moving system;
g) opening the barrier at a threshold of the first passenger moving system. Once the risk of overcrowding disappears start or change the speed of the passenger moving system and open the barrier.
   wherein:
   - step e) is performed before step c);
   - step f) is performed after step d).

In an embodiment of the invention, monitoring is performed by a monitoring device, preferably a camera, 3D sensor, electromagnetic sensor.

In an embodiment of the invention, detecting is performed by a processor, wherein the processor is adapted to calculate the amount of people and/or free space in the area. The processor is also preferably adapted to be in communication with the monitoring device and the controller.

In an embodiment of the invention, activating a speed change function is performed by a controller, wherein the controller is comprised within the passenger moving system.

In an embodiment of the invention, the controller is connected with the processor and the monitoring device. This connection advantageously allows for a faster reaction time.

In an embodiment of the invention, the area comprises at least:
- a queue area; and/or
- an exit area,
wherein the exit area, precedes the queue area in the travelling direction of the passenger on the passenger moving system.

The invention also relates to a use of a process according to any of the preceding embodiments in a building comprising at least one of:
- an escalator;
- a moving walk.

### Figure Description

The invention is described in more detail with the help of the figures, herein shows schematically
Fig. 1 shows a schematic representation of a passenger moving system implementing a process according to the invention, wherein the passenger moving system is an escalator;
Fig. 2 shows a schematic representation of a passenger moving system implementing a process according to the invention wherein the passenger moving system is an escalator;
Fig. 3 shows a schematic representation of a passenger moving system implementing a process according to the invention wherein the passenger moving system is an escalator;
Fig. 4 shows a schematic representation of a passenger moving system implementing a process according to the invention wherein the passenger moving system is an escalator;
Fig. 5 shows a schematic representation of a passenger moving system implementing a process according to a non-claimed embodiment ;
Fig. 6 shows a schematic representation of a passenger moving system implementing a process according to a another non-claimed embodiment .

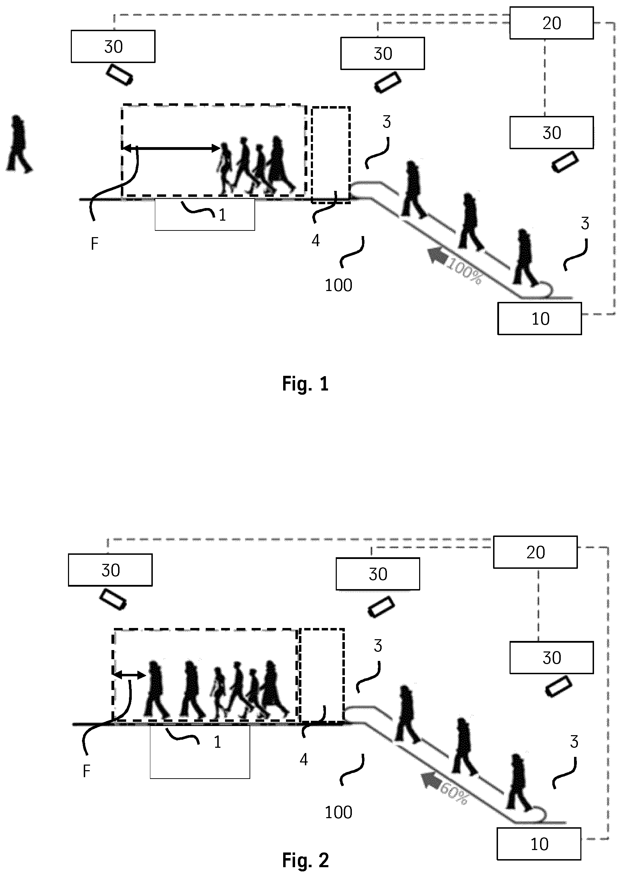

Fig. 1 shows a schematic representation of an example of a passenger moving system 100 used in a common existing building. In this particular example, the passenger moving system 100 is an escalator. In this particular example, the escalator 100 is adapted to implement a process according to the invention. In order to perform the process, the following is required:
- a queue area 1, i.e., the area where people wait, for example passport control in airports;
- an escalator(s) 100 that moves people up to the queue area via an escalator controller 10. Figure 1 shows an escalator going up but the same is applicable to an escalator going down;
- at least one monitoring device 30 that provides for monitoring of a particular area, in this example, the area is a queue area and the monitoring device is a camera 30. Within this area, the number of people/free space is determined.
- a processor 20 to calculate the amount of area that is "free" F and the amount that comprises a number of people. The processor 20 is connected to the controller 10 and at least one camera sensor 30. Based on the algorithmic calculations, the processor will execute at least one control command, e.g., to change the escalator speed, or to control one or more barriers to manage the flow of people. The processor 20 continuously measures the queue area 1 via the information that is fed to it through the camera 30, and calculates the number of passengers that are inside it and/or the free space F. The processor 20 is connected to the escalator controller 10 so it can command the escalator as necessary.
- a controller 10. The controller 10 is preferably the escalator controller. The controller can also be connected to a barrier at either threshold, i.e., entry or exit, of the escalator, wherein the barrier can be adjusted to block or promote the flow of people onto or away from the escalator.

The controller 10, processor 20 and the monitoring device 30 are interconnected and adapted to continuously monitor the queue area 1.

Figure 1 shows a steady flow of passengers travelling upwards on the escalator 100 towards the queue area 1. There are already a number of passengers in the queue area 1 however they will have moved outside of it by the time the passengers on the escalator 100 arrive. When the calculated free area F in the queue area 1 is below a configured value, for example 50% the command sent to the escalator 100 is RUN, i.e., 100% speed. As the occupation of the queue area 1 increases, however, this is detected by the camera 30 and the processor 20 sends the controller 10 a command to reduce the speed e.g., to between 20-100 %. An example of this is shown in figure 2.

In figure 2, the queue area 1 has a higher proportion of passengers than the queue area 1 shown in figure 1. The cameras 30 feed this information to the processor 20 which then calculates an amount of "free" area F and sends a new command signal to the escalator controller 10 accordingly. In this case, the command is REDUCE, e.g., 60% speed. "Reduce" can be any speed that is less than the speed at 100%. The exact speed % is dependent on the calculations performed by the processor 20.

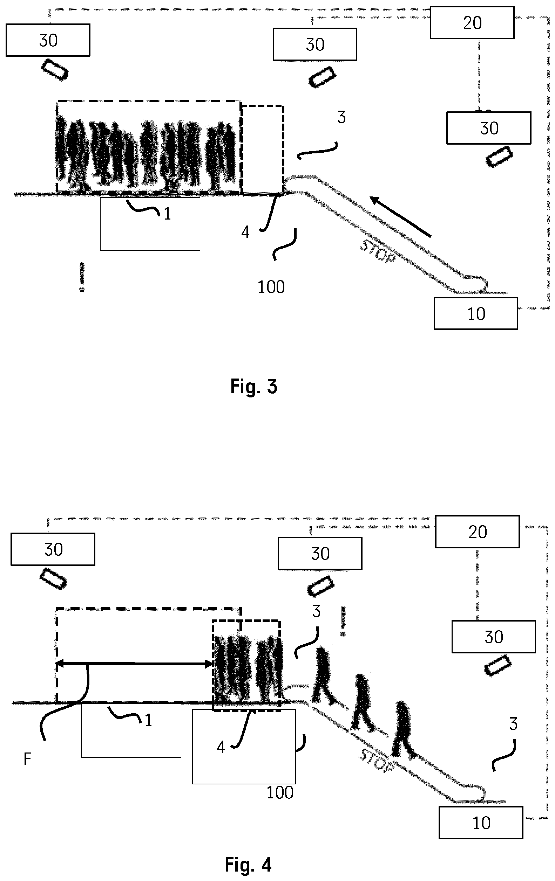

In figure 3, the queue area 1 is full of people, the processor 20, via the controller 10, sends the escalator 100 a STOP command accordingly.

In figure 4, the queue area 1 has free space F, however due to an external factor, e.g., passport control, or a succeeding escalator, the passengers have to wait in the exit area 4. This also poses a risk for incoming passengers travelling on the escalator 100 towards the exit area 4 who are anticipating disembarking. When the amount of people becomes too large in the exit area 4, there will be no free space for passengers to leave the escalator 100. This can cause a serious safety risk if the escalator 100 cannot respond to the rapidly changing situation. By implementing the process according to the invention, the exit area 4 is also continuously monitored by the camera 30 so that agglomerations of people at the exit 4 of the escalator 100 can be detected and a high risk situation can be avoided. By implementing the process according to the invention, the escalator system 100 is able to assess autonomously the risk level of the situation depending on the available free space F in the queue area 1, and/or the exit area 4. The system is able to assess whether:
- there is tendency detected is that the queue is increasing but there is enough available space to accommodate more passengers, e.g., the exit area 4 is free. In such a situation, the risk is "moderate" and the process is as described before, i.e., a speed reduction is carried out, e.g., "RUN at 50%" and then eventually the escalator 100 comes to a stop.
- there is not enough available space in the queue area 1 or in the exit area 4 to accommodate more passengers in a safe way, the risk is "high" and the system will act as a safety device. The process will initiate a command of "STOP" immediately to the escalator system 100. If the escalator 100 is equipped with a barrier (not shown) at its entrance, this can be closed to avoid more passengers from entering the escalator 100 while it is stopped or travelling at a low speed.

The barrier can close automatically when a space around the barrier is free of passengers. A warning signal system e.g., a visual or audible alarm or voice message can optionally alert passengers about the barrier action.

The controller 10 activates the order to close barriers where they will remain closed until there is free space again in the queue area 1.

Once the queue area 1 and/or the exit area 4 has enough space to accommodate more people, the system either:
- increases the speed of the escalator 100; or
- sends a command signal to start the escalator 100; and/or
- sends a command signal to open the barrier,
in order to allow people to use the escalator 100 again.

The described figures show only one escalator 100 but multiple escalators can be controlled using this process.

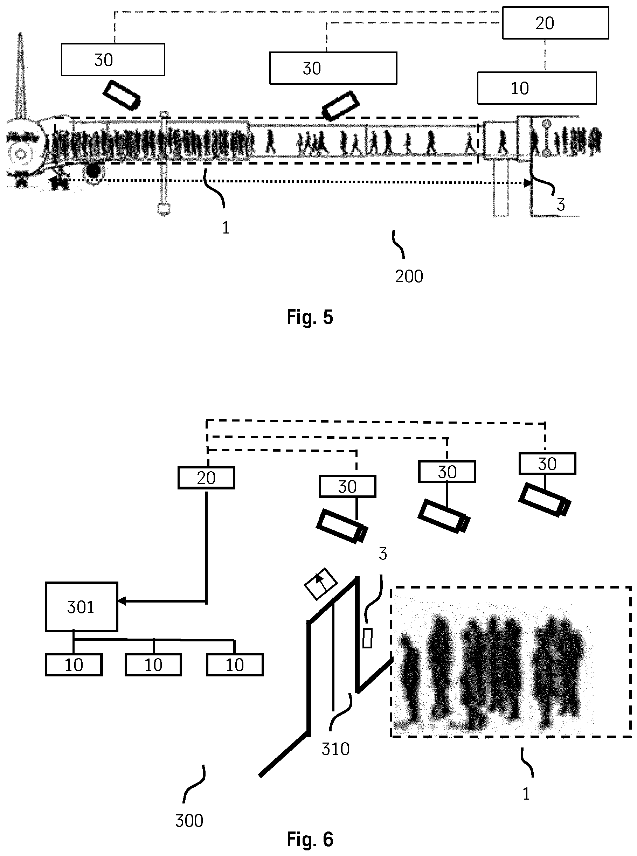

This solution could also be used for a passenger boarding bridge (PBB) 200 as shown in figure 5. The cameras 30 feed images to the processor 20 which in this case could send the information about the free and/or occupied space to the person performing the boarding pass check. If this process is done automatically, the controller 10 triggers an order to close the boarding gate door at the terminal building to prevent passengers from entering the passenger boarding bridge.

The process allows that the number of people in the PBB area 1 can be calculated and this information can then be provided to the aircraft crew and boarding gate personnel in order to give an indication as to the amount of people that are waiting and the amount of people that have already entered the aircraft.

Figure 6 relates to a situation when the process is used in an elevator 300, the process is as described above. The monitoring device 30, in this example, a camera, continuously monitors the people in the queue area 1. However, due to the limited cabin space, the information related the number of people or occupied space in the area 1 in front the elevator door 310 can also be used by the dispatching unit 301 to send, if necessary, more cabins to this particular floor in order to accommodate the waiting passengers and bring them to their desired destinations. In the same way, if the system detects that there are no passengers waiting for an elevator, the dispatching system 301 can remove this particular floor as a destination if it was already programed, thereby freeing the elevator cabin to travel to a floor where a greater number of people are present.

It should be understood that the appended figures are not necessarily to scale and present a simplified representation of various features illustrative of the basic principles of the invention. The specific design features of the present invention, for example, dimensions, orientations, locations and shapes; will be determined by the particular intended application and use environment. Accordingly, the foregoing description is intended to be illustrative rather than restrictive.

### Reference signs list

- 1: queue area
- 3: threshold
- 4: exit area

- 10: controller
- 20: processor
- 30: monitoring device

- 100: escalator

- 200: passenger boarding bridge

- 300: elevator
- 301: dispatching unit
- 310: elevator door

## Claims

1. Process for automizing the monitoring of passengers on a passenger moving system (100), which is an escalator or a moving walk, comprising the steps of:
a) continuously monitoring an area (1, 4) of a first passenger moving system (100) wherein the area (1, 4) is located beyond at least one threshold (3) on the passenger moving system (100) wherein the threshold (3) refers to a point of entry or exit;
b) calculating the amount of free and/or occupied space (F) within the area (1, 4);
c) detecting a risk of overcrowding in the area (1, 4);
d) optionally activating a speed change function on the passenger moving system (100);
**characterized by** the step of
e) communicating a warning signal to passengers informing them that they should not use the passenger moving system (100).

2. Process according to claim 1 further comprising the steps of:
f) closing a barrier at a threshold (3) of a first passenger moving system (100);
g) opening the barrier at a threshold (3) of the first passenger moving system (100). wherein:
- step e) is performed before step c);
- step f) is performed after step d).

3. Process according to any of the preceding claims,
**characterized in that,**
monitoring is performed by a monitoring device (30).

4. Process according to any of the preceding claims,
**characterized in that,**
detecting is performed by a processor (20), wherein the processor is adapted to calculate the amount of people and/or free space (F) in the area (1, 4).

5. Process according to any of the preceding claims,
**characterized in that,**
activating a speed change function is performed by a controller (10), wherein the controller (10) is comprised within the passenger moving system (100).

6. Process according to any of the preceding claims,
**characterized in that,**
the controller (10) is connected with the processor (20) and the monitoring device (30).

7. Process according to any of the preceding claims,
**characterized in that,**
the area (1, 4) comprises at least:
- a queue area (1); and/or
- an exit area (4),
wherein the exit area (4), precedes the queue area (1) in the travelling direction of the passenger on the passenger moving system (100).

8. Process according to any of claims 1 to 7 in a building comprising at least one of:
- an escalator (100);
- a moving walk (100) .

## Patentansprüche

1. Verfahren zum Automatisieren der Überwachung von Fahrgästen auf einem Personenbeförderungssystem (100), das eine Fahrtreppe oder ein Fahrsteig ist, umfassend die folgenden Schritte:
a) kontinuierliches Überwachen eines Bereichs (1, 4) eines ersten Personenbeförderungssystems (100), wobei sich der Bereich (1, 4) jenseits einer Schwelle (3) an dem Personenbeförderungssystem (100) befindet, wobei sich die Schwelle (3) auf einen Einstiegs- oder Ausstiegspunkt bezieht;
b) Berechnen der Menge an freiem und/oder belegtem Raum (F) innerhalb des Bereichs (1, 4);
c) Erkennen eines Risikos einer Überbelegung in dem Bereich (1, 4);
d) optionales Aktivieren einer Geschwindigkeitsänderungsfunktion an dem Personenbeförderungssystem (100);
**gekennzeichnet durch** den folgenden Schritt:
e) Kommunizieren eines Warnsignals an die Fahrgäste, das sie informiert, dass sie das Personenbeförderungssystem (100) nicht verwenden sollten.

2. Verfahren nach Anspruch 1, ferner umfassend die folgenden Schritte:
f) Schließen einer Schranke an einer Schwelle (3) eines ersten Personenbeförderungssystems (100);
g) Öffnen der Schranke an einer Schwelle (3) des ersten Personenbeförderungssystems (100);
wobei:
- Schritt e) vor Schritt c) ausgeführt wird;
- Schritt f) nach Schritt d) ausgeführt wird.

3. Verfahren nach einem der vorhergehenden Ansprüche, **dadurch gekennzeichnet, dass**
das Überwachen durch eine Überwachungsvorrichtung (30) erfolgt.

4. Verfahren nach einem der vorhergehenden Ansprüche, **dadurch gekennzeichnet, dass**
das Detektieren durch einen Prozessor (20) erfolgt, wobei der Prozessor dazu ausgelegt ist, die Menge an Personen und/oder freiem Raum (F) in dem Bereich (1, 4) zu berechnen.

5. Verfahren nach einem der vorhergehenden Ansprüche, **dadurch gekennzeichnet, dass**
das Aktivieren einer Geschwindigkeitsänderungsfunktion durch eine Steuerung (10) erfolgt, wobei die Steuerung (10) innerhalb des Personenbeförderungssystems (100) umfasst ist.

6. Verfahren nach einem der vorhergehenden Ansprüche, **dadurch gekennzeichnet, dass**
die Steuerung (10) mit dem Prozessor (20) und der Überwachungsvorrichtung (30) verbunden ist.

7. Verfahren nach einem der vorhergehenden Ansprüche, **dadurch gekennzeichnet, dass**
der Bereich (1, 4) mindestens Folgendes umfasst:
- einen Warteschlangenbereich (1); und/oder
- einen Ausstiegsbereich (4),
wobei der Ausstiegsbereich (4) dem Warteschlangenbereich (1) in der Fahrtrichtung des Fahrgasts auf dem Personenbeförderungssystem (100) vorangeht.

8. Verfahren nach einem der Ansprüche 1 bis 7 in einem Gebäude, das mindestens eines von Folgendem umfasst:
- eine Fahrtreppe (100);
- einen Fahrsteig (100).

## Revendications

1. Procédé d'automatisation de la surveillance de passagers sur un système de déplacement de passagers (100), qui est un escalier mécanique ou un tapis roulant, comprenant les étapes suivantes :
a) la surveillance continue d'une zone (1, 4) d'un premier système de déplacement de passagers (100) dans lequel la zone (1, 4) est située au-delà d'au moins un seuil (3) sur le système de déplacement de passagers (100), dans lequel le seuil (3) se réfère à un point d'entrée ou de sortie ;
b) le calcul d'une quantité d'espace libre et/ou occupé (F) à l'intérieur de la zone (1, 4) ;
c) la détection d'un risque de surpeuplement dans la zone (1, 4) ;
d) l'activation facultative d'une fonction de changement de vitesse sur le système de déplacement de passagers (100) ;
**caractérisé par** l'étape suivante
e) la communication d'un signal d'avertissement aux passagers les informant qu'ils ne doivent pas utiliser le système de déplacement de passagers (100).

2. Procédé selon la revendication 1, comprenant en outre les étapes suivantes :
f) la fermeture d'une barrière à un seuil (3) d'un premier système de déplacement de passagers (100) ;
g) l'ouverture d'une barrière à un seuil (3) du premier système de déplacement de passagers (100) ;
dans lequel :
- l'étape e) est exécutée avant l'étape c) ;
- l'étape f) est exécutée après l'étape d).

3. Procédé selon l'une quelconque des revendications précédentes,
**caractérisé en ce que**,
la surveillance est exécutée par un dispositif de surveillance (30).

4. Procédé selon l'une quelconque des revendications précédentes,
**caractérisé en ce que**,
la détection est exécutée par un processeur (20), dans lequel le processeur est conçu pour calculer une quantité de personnes et/ou d'espace libre (F) dans la zone (1, 4).

5. Procédé selon l'une quelconque des revendications précédentes,
**caractérisé en ce que**,
l'activation d'une fonction de changement de vitesse est exécutée par un contrôleur (10), dans lequel le contrôleur (10) est compris à l'intérieur du système de déplacement de passagers (100).

6. Procédé selon l'une quelconque des revendications précédentes,
**caractérisé en ce que**,
le contrôleur (10) est connecté au processeur (20) et au dispositif de surveillance (30).

7. Procédé selon l'une quelconque des revendications précédentes,
**caractérisé en ce que**,
la zone (1, 4) comprend au moins :
- une zone de file d'attente (1) ; et/ou
- une zone de sortie (4),
dans lequel la zone de sortie (4) précède la zone de file d'attente (1) dans la direction de déplacement des passagers sur le système de déplacement de passagers (100).

8. Procédé selon l'une quelconque des revendications 1 à 7 dans un bâtiment comprenant au moins l'un des éléments suivants :
- un escalier mécanique (100) ;
- un tapis roulant (100).
